# FASCICULE DE BREVET EUROPEEN

(11) **EP 1 863 698 B1**
(45) Date de publication et mention de la délivrance du brevet: **02.11.2011**
(21) Numéro de dépôt: 06726141.2
(22) Date de dépôt: 23.03.2006
(51) Int. Cl.: B62D 43/10, B60R 11/06

(54) **SYSTEME DE FIXATION D' UNE ROUE DE SECOURS D' UN VEHICULE**
SYSTEM ZUR BEFESTIGUNG EINES KRAFTFAHRZEUGERSATZRADS
SYSTEM FOR FIXING A MOTOR VEHICLE SPARE WHEEL

(30) Priorité: 31.03.2005 FR 0503129
(43) Date de publication de la demande: 12.12.2007
(73) Titulaire: PEUGEOT CITROËN AUTOMOBILES S.A., 78140 Vélizy Villacoublay (FR)
(72) Inventeur: PERROT, Olivier, F-92500 Rueil Malmaison (FR); DEMONTANT, Daniel, 91100 Corbeil Essonnes (FR)
(86) Numéro de dépôt international: PCT/FR2006/000648
(87) Numéro de publication internationale: WO 2006/103339

(56) Documents cités:
- EP-A- 0 415 899
- EP-A- 0 899 160
- DE-C1- 10 105 742
- US-A1- 2006 017 301

## Description

La présente invention se rapporte à un système de fixation d'une roue de secours d'un véhicule et, plus particulièrement, à un tel système qui permet également de solidariser une boîte à cric dans la roue de secours. Un tel système assure la fixation d'une roue de secours, ou d'une roue crevée lorsque la roue de secours est utilisée, munie de la boîte à cric, dans un logement du véhicule prévu à cet effet.

Il est courant de prévoir un logement ménagé à l'intérieur du véhicule, par exemple une cuvette dans le plancher du coffre, qui est dimensionnée pour recevoir la roue de secours et la boîte à cric du véhicule. Typiquement, la roue, avec la boîte à cric disposée dans un évidement central de la roue, sont maintenues dans la cuvette par une sangle. Cependant, avec une telle fixation par sangle, la roue et la boîte à cric ne sont pas bien maintenues dans la cuvette et il en résulte des vibrations et des chocs lorsque le véhicule est en mouvement, ce qui peut générer une nuisance sonore pour les passagers du véhicule.

Il a donc été proposé de fixer la roue et la boîte à cric de manière positive utilisant une pince rigide, montée de part et d'autre de la cuvette, qui s'étend à travers la roue et la retient en place. Ce type de système est décrit dans la demande de brevet français FR 03 14 392 et EP 0515899. La pince rigide, sensiblement en forme d'un U, est articulée aux extrémités des bras du U sur la cuvette, l'autre extrémité du U étant retenue par une fixation, solidaire avec le plancher du coffre.

Or, ce type de fixation n'assure pas l'immobilisation de la boîte à cric relatif à la roue de secours, ce qui laisse toujours une possibilité de nuisance sonore. De plus, le coût d'un tel système est relativement élevé et sa mise en place par un opérateur sur une chaîne de production peut s'avérer difficile. Ce type de fixation présente également un inconvénient dans la mesure où une fixation n'est adaptée qu'à certains véhicules, des véhicules d'une autre gamme nécessitant une fixation de dimensions différentes.

Ainsi, la demanderesse s'est fixé comme objectif de fournir un système de fixation d'une roue de secours d'un véhicule qui est de coût relativement faible, qui peut être installé facilement par un opérateur ou par un conducteur de véhicule, et qui peut s'adapter sur une gamme de véhicules importantes.

Aussi, la présente invention a trait à un système de fixation d'une roue de secours d'un véhicule dans une cuvette prévue dans la carrosserie du véhicule, la cuvette étant munie d'un fond, la roue comportant un évidement central formé d'au moins une ouverture, **caractérisé en ce que** le système comprend une vis munie d'une partie filetée et d'une tête, un logement pour la tête de vis monté sur le fond de la cuvette, le logement comprenant une pièce mobile libre de coulisser selon un premier axe, la pièce mobile étant formé avec une ouverture longitudinale s'étendant de manière sensiblement orthogonale au premier axe et agencé pour recevoir la tête de la vis, et un écrou adapté à être monté sur la vis de façon que, lorsque la roue de secours est installée dans la cuvette, la vis s'étend à travers l'ouverture et engage la pièce mobile du logement, l'écrou étant reçu et serré sur la vis de telle sorte qu'il contraigne la roue contre le fond de la cuvette.

De préférence, le système est adapté pour maintenir une boîte à cric dans l'évidement formé dans la roue de secours.

Avantageusement, la pièce mobile comprend deux surfaces inclinées opposées d'appui, dont les bords respectifs opposés délimitent deux côtés parallèles de l'ouverture.

De préférence, la tête de la vis comporte une surface sensiblement frustro-conique qui est destinée à venir en contact avec les surfaces d'appui.

D'autres caractéristiques et avantages de la présente invention vont maintenant être décrits de manière plus détaillée à l'aide des dessins annexés donnés à titre illustratif et non limitatif sur lesquels:
- la Figure 1 est une vue schématique générale en section un système de fixation d'une roue de secours d'un véhicule selon l'invention ;
- les Figures 2, 3 et 4 sont chacune une vue schématique en détail d'un élément de la figure 1;
- la Figure 5 est une vue schématique d'une partie du système de fixation selon l'invention ; et
- la Figure 6 est une vue en détail de la section de la Figure 1.

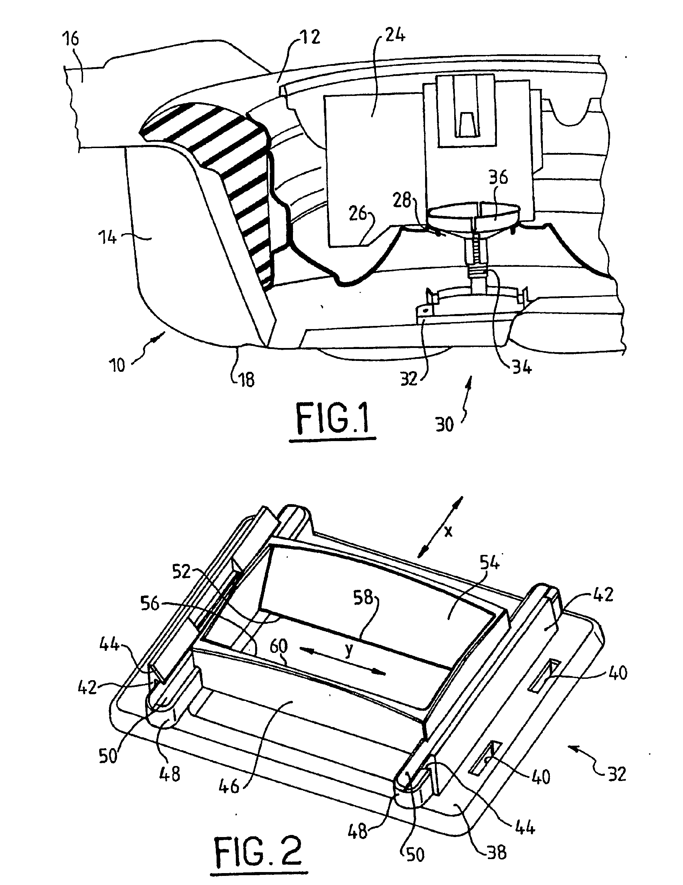

Sur la Figure 1 est représenté un logement 10 pour une roue de secours 12 d'un véhicule. Le logement 10 comprend une cuvette 14 formée dans le plancher 16 du coffre du véhicule et munie d'un fond 18 qui, dans l'exemple illustré, a une forme sensiblement circulaire. La roue de secours 12 comporte un évidement central 20 muni d'au moins une ouverture 22. Une boîte à cric 24 est disposée dans l'évidemment central 20 et comporte un fond 26 dans laquelle est formée une ouverture 28. Dans l'exemple illustré la boîte à cric est formée en matériau plastique, par exemple du polyamide.

Selon l'invention, la roue de secours est munie d'un système de fixation, représenté généralement en 30, destiné à contraindre la roue contre le fond 18 de la cuvette 14. Le système de fixation 30 comprend un logement 32, monté sur le fond 18 de la cuvette 14, une vis 34 et un écrou 36 qui seront décrits plus en détail ci-après.

Sur la Figure 2 est représenté plus en détail le logement 32 qui comprend un cadre 38 destiné à être monté sur le fond 18 de la cuvette 14 par clippage au moyen d'ergots élastiques 40 qui passent à travers des ouvertures ménagées à cet effet dans le fond 18 et engagent la surface inférieure du fond 18. Le cadre 38 est muni de deux parois parallèles 42 munies chacune d'une surface de retenue 44 respective qui, ensemble, forment une glissière pour une pièce mobile 46. La pièce mobile 46 comprend deux bras parallèles 48 destinés à être retenus par les parois parallèles 42, et munis chacun d'une surface supérieure 50 destinées à engager la surface de retenue 44 associée afin que le cadre soit contraint de coulisser dans le cadre 38 selon un premier axe x parallèle aux parois 42. La pièce mobile 46 comporte une ouverture longitudinale 52, sensiblement rectangulaire, qui s'étend selon une direction y de manière sensiblement orthogonale au premier axe x. La pièce mobile 46 comprend deux surfaces inclinées opposées d'appui 54 et 56, dont les bords respectifs 58 et 60 opposés délimitent deux côtés parallèles de l'ouverture 52. L'inclinaison des surfaces 54 et 56 est telle que lorsque un objet se déplace selon un axe z, orthogonal aux axes x et y, et vient en appui contre l'une des surfaces, il provoque un déplacement de la pièce mobile 46 selon l'axe x. Le cadre 38 et la pièce mobile 46 sont formés en matériau plastique, par exemple du polyamide et peuvent être munis d'un ergot de retenue (non représenté) pour maintenir temporairement la pièce mobile au centre du cadre 38.

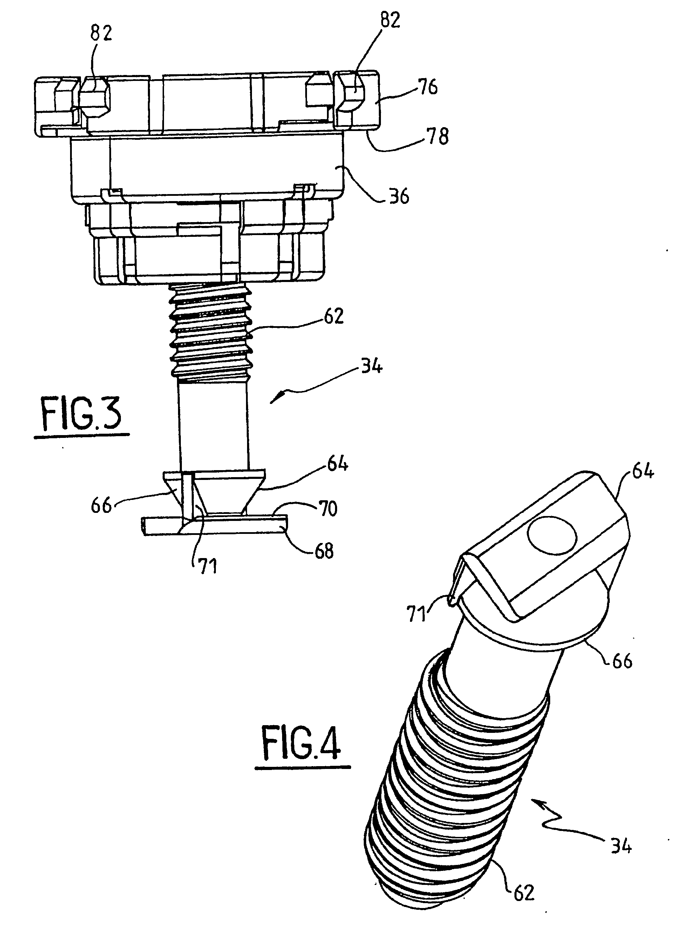

Comme représenté sur les Figures 3 et 4, la vis 34 comprend une partie filetée 62 et une tête 64. La partie filetée 62 est agencée pour recevoir l'écrou 36 comme il sera décrit plus en détail ci-après. La tête 64 de la vis 34 comporte une surface sensiblement frustro-conique 66 qui est destinée à venir en contact avec les surfaces d'appui 54 et 56, et deux prolongations latérales 68 munie d'une surface de retenue 70 destinée à venir en appui contre la surface inférieure des surfaces d'appui 54 et 56. La tête 64 de la vis 34 comprend également deux surfaces de butées 71 destinées à venir en contact contre les bords 58 et 60 des surfaces d'appui 54 et 56 afin de bloquer la vis 34 en rotation.

L'écrou 36 illustré sur les Figues 3 et 5 comprend une partie centrale filetée 72 formée de languettes élastiques 74, quatre dans l'exemple illustré, qui est destinée à être montée sur la partie filetée 62 de la vis 34. L'écrou 36 comporte également une partie élargie 76 formant poignée pour un opérateur ainsi qu'une surface annulaire 78 destinée à engager une surface annuaire correspondante 80 sur la roue de secours. La partie élargie 76 comprend des ergots élastiques 82 permettant de rend l'écrou 36 solidaire avec la boîte à cric 24. Les languettes élastiques 74 permettent soit d'avancer l'écrou sur le filet de la vis 34 par une rotation classique, soit lorsque l'on cherche à avancer l'écrou rapidement le long de la vis 34, d'exercer une force manuelle sur l'écrou dans le sens axial de la vis afin que les languettes 74 se déforment et passent par dessous les filets de la vis. Dans l'exemple illustré la vis 34 et l'écrou 36 sont formés en matériau plastique, par exemple du polyamide.

Le fonctionnement du système de fixation d'une roue de secours d'un véhicule selon l'invention sera maintenant décrit. Dans un premier temps, le cadre 38 du logement 32 est monté sur le fond 18 de la cuvette 14 du véhicule, avantageusement après l'étape de cataphorèse de la caisse du véhicule. Puis, lors d'une étape ultérieure de la production, la roue de secours est posée dans la cuvette 14, l'évidemment central 20 de la roue ouvert vers le haut. Ensuite, la vis 34 est partiellement vissée à l'intérieur de l'écrou 36, puis l'opérateur passe la tête 64 de la vis à travers l'ouverture 22 de la roue de secours afin qu'elle vienne en contact contre la pièce mobile 46 du logement 32. Les dimensions de la pièce mobile 46 sont déterminées afin que, quelque soit la position de la roue de secours dans la cuvette 14, la tête de vis 64 vienne en contact avec elle, soit en rentrant directement dans l'ouverture 52, soit en venant en contact avec l'une ou l'autre des surfaces inclinées 54 et 56. Si la tête de vis 64 rentre en contact avec l'une des surfaces inclinées, un effort exercé par l'opérateur selon l'axe de la vis 34 entraînera un déplacement de la pièce mobile 46 selon l'axe x jusqu'à ce que la tête de vis 64 entre dans l'ouverture 52.

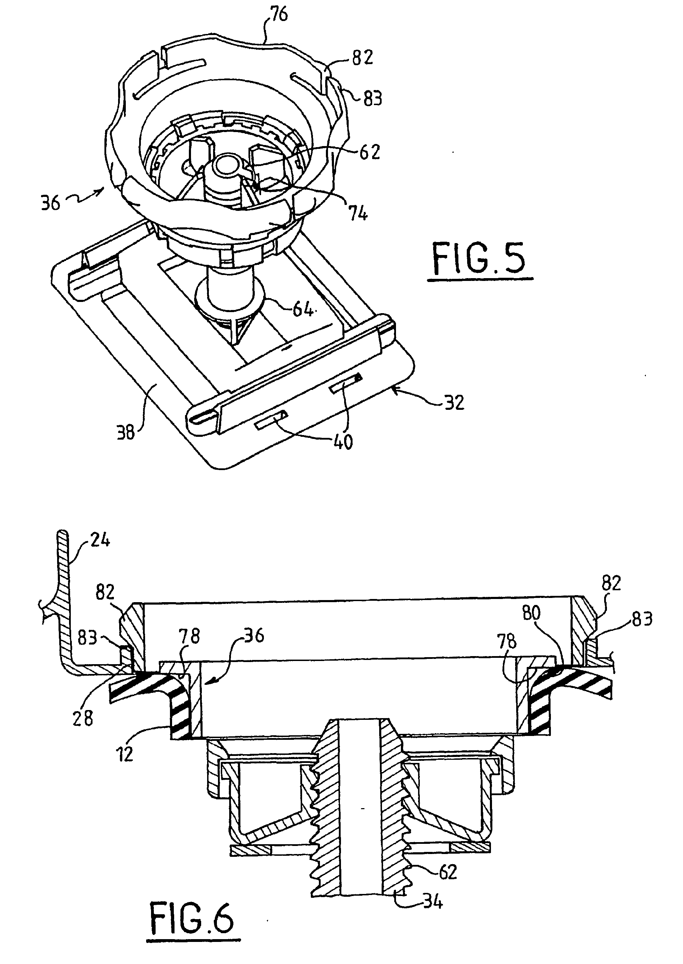

Une fois que la tête de vis 64 a pénétré dans l'ouverture 52, l'opérateur donne un quart de tour à la vis 34 afin que la surface de retenue 70 de la prolongation latérale 68 vienne en contact avec la surface inférieure de la pièce mobile 46, rendant ainsi les deux pièces solidaires, la rotation de la tête de vis 64 étant limitée par les surfaces de butée 71 qui viennent en contact contre les bords 56 et 58. Ensuite, l'opérateur exerce une pression sur l'écrou 36 selon l'axe de la vis 34 afin que les languettes 74 se déforment et laissent l'écrou avancer le long de la vis 34 jusqu'à ce qu'un épaulement 75 (voir la Figure 6) formé sur l'écrou vienne en butée contre la roue de secours. Puis, afin de contraindre la roue de secours contre le fond 18 de la cuvette 14 l'opérateur tourne l'écrou 36 jusqu'il soit serré. Les cliquets du dispositif de limitation de couple sont dimensionnés afin de limiter la tension créée dans la vis pour que le fond de la cuvette ne soit pas déformé. De préférence, la tension dans la vis est limitée à 15 à 20 kg. De manière alternative, l'opérateur peut exercer une pression sur l'écrou, avant d'avoir donné un quart de tour à la vis 34, puis, une fois que l'épaulement 75 formé sur l'écrou soit venu en butée contre la roue de secours, tourner l'écrou 36 pour fixer l'ensemble en place.

Une fois que l'écrou 36 a été serré sur la roue de secours, l'opérateur installe la boîte à cric en centrant l'ouverture 28 sur l'écrou, puis en appuyant sur la boîte afin que le bord de l'ouverture déforme la partie élargie 76 de l'écrou afin que la boîte soit retenue en place entre la roue de secours 12 et les ergots élastiques 82 qui viennent en appui contre le bord 83 de l'ouverture 28, comme on le voit sur la Figure 6.

Le système de fixation d'une roue de secours selon l'invention permet de fixer de manière simple et rapide la roue de secours du véhicule, ainsi que la boîte à cric. Une fois l'écrou serré sur la vis le système offre l'avantage additionnel de réduire les nuisances sonores perçues par les passagers du véhicule car il rend plus rigide la cuvette du coffre du véhicule, réduisant ainsi les vibrations produites.

Lorsque le conducteur cherche à retirer la roue de secours du coffre du véhicule, il retire d'abord la boîte à cric, puis dévisse l'écrou 36. Dès que la vis 34 a tourné un quart de tour, les deux surfaces de butées 71 viennent en contact contre les bords 58 et 60 des surfaces d'appui 54 et 56 et bloquent la vis 34 en rotation. Le conducteur peut ensuite retirer la vis et libérer la roue de secours.

## Revendications

1. Système de fixation d'une roue de secours d'un véhicule dans une cuvette (14) prévue dans la carrosserie du véhicule, la cuvette étant munie d'un fond (18), la roue comportant un évidement central (20) formé d'au moins une ouverture (22), le système comprend une vis (34) munie d'une partie filetée (62) et d'une tête (64), un logement (32) pour la tête de vis monté sur le fond (18) de la cuvette (14), **caractérisé en ce que** le logement (32) comprenant une pièce mobile (46) libre de coulisser selon un premier axe (x), la pièce mobile (46) étant formé avec une ouverture longitudinale (52) s'étendant de manière sensiblement orthogonale au premier axe et agencé pour recevoir la tête (64) de la vis, et un écrou (36) adapté à être monté sur la vis de façon que, lorsque la roue de secours est installée dans la cuvette, la vis (34) s'étend à travers l'ouverture (22) et engage la pièce mobile (46) du logement (32), l'écrou (36) étant reçu et serré sur la vis de telle sorte qu'il contraigne la roue contre le fond de la cuvette.

2. Système selon la revendication 1 **caractérisé en ce qu'**il est adapté pour maintenir en outre une boîte à cric (24) dans l'évidemment (20) formé dans la roue de secours.

3. Système selon la revendication 1 ou 2 **caractérisé en ce que** la pièce mobile (46) comprend deux surfaces inclinées opposées d'appui (54 et 56), dont les bords respectifs (58 et 60) opposés délimitent deux côtés parallèles de l'ouverture (52).

4. Système selon la revendication 3 **caractérisé en ce que** la tête (64) de la vis (34) comporte une surface sensiblement frustro-conique (66) qui est destinée à venir en contact avec les surfaces d'appui (54 et 56).

5. Système selon la revendication 3 ou 4 **caractérisé en ce que** la tête (64) de la vis (34) comporte une prolongation latérale (68) munie d'une surface de retenue (70) destinée à venir en contact avec une surface inférieure de la pièce mobile (46), rendant ainsi les deux pièces solidaires.

6. Système selon l'une des revendications précédentes **caractérisé en ce que** l'écrou (36) comprend une partie centrale filetée (72) formée de languettes élastiques (74), qui est destinée à être montée sur la partie filetée (62) de la vis (34), les languettes élastiques étant dimensionnées afin que, lorsque qu'un opérateur exerce une pression sur l'écrou (36) selon l'axe de la vis (34), les languettes (74) se déforment et laissent l'écrou avancer le long de la vis (34).

7. Système selon l'une des revendications 2 à 6 **caractérisé en ce que** l'écrou (34) comporte des ergots élastiques (82) destinés à engager une ouverture (28) dans la boîte à cric (24).

## Claims

1. System for fixing a spare wheel of a vehicle in a trough (14) provided in the bodywork of the vehicle, the trough (14) being equipped with a base (18), the wheel comprising a central recess (20) formed of at least one opening (22), the system comprising a screw (34) provided with a threaded portion (62) and with a head (64), and a seat (32), formed in the base (18) of the trough (14), for the screw head, **characterised in that** the seat (32) comprises a mobile part (46) which is free to slide along a first axis (x), the mobile part (46) being formed with a longitudinal opening (52) extending substantially orthogonal to the first axis and arranged so as to receive the head (64) of the screw, and a nut (36) which is adapted to be mounted on the screw in such a way that, when the spare wheel is installed in the trough, the screw (34) extends through the opening (22) and engages the mobile part (46) of the seat (32), the nut (36) being received and gripped on the screw in such a way that it holds the wheel against the base of the trough.

2. System according to claim 1, **characterised in that** it is adapted to further hold a jack box (24) in the recess (20) formed in the spare wheel.

3. System according to either claim 1 or claim 2, **characterised in that** the mobile part (46) comprises two opposed, inclined support surfaces (54 and 56), of which the respective opposite edges (58 and 60) define two parallel sides of the opening (52).

4. System according to claim 3, **characterised in that** the head (64) of the screw (34) comprises a substantially frustoconical surface (66) for contacting the support surfaces (54 and 56).

5. System according to either claim 3 or claim 4, **characterised in that** the head (64) of the screw (34) comprises a lateral extension (68) equipped with a holding surface (70) for contacting a lower surface of the mobile part (46), thus making the two parts integral.

6. System according to any one of the preceding claims, **characterised in that** the nut (36) comprises a threaded central portion (72) which is formed of resilient tabs (74) and is to be mounted on the threaded portion (62) of the screw (34), the resilient tabs being dimensioned so that, when an operator exerts a pressure on the nut (36) along the axis of the screw (34), the tabs (74) deform and allow the nut to advance along the screw (34).

7. System according to any one of claims 2 to 6, **characterised in that** the nut (34) comprises resilient lugs (82) for engaging an opening (28) in the jack box (24).

## Patentansprüche

1. System zur Befestigung eines Reserverads eines Fahrzeugs in einer Wanne (14), die im Aufbau des Fahrzeugs vorgesehen ist, wobei die Wanne mit einem Boden (18) ausgestattet ist, wobei das Rad eine zentrale Aussparung (20) umfasst, die von mindestens einer Öffnung (22) gebildet wird, wobei das System eine Schraube (34) umfasst, die mit einem Gewindeteil (62) und einem Kopf (64) ausgestattet ist, und eine Aufnahme (32) für den Kopf der Schraube, die auf dem Boden (18) der Wanne (14) befestigt ist, **dadurch gekennzeichnet, dass** die Aufnahme (32) einen beweglichen Teil (46) umfasst, der entlang einer ersten Achse (x) frei verschiebbar ist, wobei der bewegliche Teil (46) mit einer länglichen Öffnung (52) ausgebildet ist, die sich im Wesentlichen rechtwinkelig zur ersten Achse erstreckt und angeordnet ist, um den Kopf (64) der Schraube aufzunehmen, und eine Mutter (36), die angepasst ist, um so auf der Schraube befestigt zu werden, dass, wenn das Reserverad in der Wanne angeordnet ist, sich die Schraube (34) durch die Öffnung (22) erstreckt und in den beweglichen Teil (46) der Aufnahme (32) eingreift, wobei die Mutter (36) auf der Schraube aufgenommen und so angezogen wird, dass sie das Rad gegen den Boden der Wanne festspannt.

2. System nach Anspruch 1, **dadurch gekennzeichnet, dass** es angepasst ist, um ferner einen Wagenheberkasten (24) in der Aussparung (20), die im Reserverad ausgebildet ist, festzuhalten.

3. System nach Anspruch 1 oder 2, **dadurch gekennzeichnet, dass** der bewegliche Teil (46) zwei gegenüberliegende geneigte Auflageflächen (54 und 56) umfasst, deren jeweils gegenüberliegende Ränder (58 und 60) zwei parallele Seiten der Öffnung (52) begrenzen.

4. System nach Anspruch 3, **dadurch gekennzeichnet, dass** der Kopf (64) der Schraube (34) eine im Wesentlichen kegelstumpfförmige (66) Fläche aufweist, die dazu bestimmt ist, mit den Auflageflächen (54 und 56) in Kontakt zu treten.

5. System nach Anspruch 3 oder 4, **dadurch gekennzeichnet, dass** der Kopf (64) der Schraube (34) eine seitliche Verlängerung (68) umfasst, die mit einer Haltefläche (70) ausgestattet ist, die dazu bestimmt ist, mit einer Unterseite des beweglichen Teils (46) in Kontakt zu treten, wodurch die beiden Teile fest verbunden werden.

6. System nach einem der vorhergehenden Ansprüche, **dadurch gekennzeichnet, dass** die Mutter (36) einen zentralen Gewindeteil (72) umfasst, der von elastischen Lamellen (74) gebildet wird und der dazu bestimmt ist, auf dem Gewindeteil (62) der Schraube (34) befestigt zu werden, wobei die elastischen Lamellen so dimensioniert sind, dass, wenn ein Benutzer einen Druck auf die Mutter (36) entlang der Achse der Schraube (34) ausübt, sich die Lamellen (74) verformen und die Mutter entlang der Schraube (34) fortbewegen lassen.

7. System nach einem der Ansprüche 2 bis 6, **dadurch gekennzeichnet, dass** die Mutter (34) elastische Noppen (82) umfasst, die dazu bestimmt sind, in eine Öffnung (28) im Wagenheberkasten (24) einzugreifen.
